## Europäisches Patentamt

## European Patent Office

## Office européen des brevets

(19)

(11) Publication number: **0 028 104**
**B1**

---

(12) **EUROPEAN PATENT SPECIFICATION**

(45) Date of publication of patent specification: **15.02.84**

(21) Application number: **80303656.5**

(22) Date of filing: **16.10.80**

(51) Int. Cl.³: **H 04 Q 11/04,**
**H 04 Q 1/457, H 04 Q 1/448**

---

(54) **Signal control system for a time-division speech network.**

---

(30) Priority: **17.10.79 JP 134484/79**

(43) Date of publication of application:
**06.05.81 Bulletin 81/18**

(45) Publication of the grant of the patent:
**15.02.84 Bulletin 84/7**

(84) Designated Contracting States:
**DE FR GB SE**

(56) References cited:
**WO - A - 80/00289**
**FR - A - 2 226 797**
**FR - A - 2 367 399**
**GB - A - 1 444 919**
**US - A - 3 985 966**
**US - A - 4 152 548**

**IEEE NATIONAL TELECOMMUNICATIONS**
**CONFERENCE, 1975 New Orleans, US KASSON:**
**"System self test, administration & maintenance**
**in the ROLM CBX", pages 11-20 to 11-23**

(73) Proprietor: **FUJITSU LIMITED**
**1015, Kamikodanaka Nakahara-ku**
**Kawasaki-shi Kanagawa 211 (JP)**

(72) Inventor: **Ishikawa, Hiroshi**
**No. 466-18, Eda-cho Midori-ku, Yokohama-shi**
**Kanagawa, 227 (JP)**
Inventor: **Kojima, Takuhito**
**No. 2-11-1, Chuohrinkan Yamato-shi**
**Kanagawa, 242 (JP)**
Inventor: **Minamitani, Eiji**
**No. 8, Susukino, 2-chome, Midori-ku Yokohama-shi**
**Susukino Daini-Danchi 2-302 Kanagawa 227 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

(56) References cited:
**INTERNATIONAL CONFERENCE ON**
**COMMUNICATIONS, June 1979, Boston, US**
**INOUE et al. "Time-shared two-wire digital**
**transmission for subscriber loops", pages 2.4.1-**
**2.4.5.**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

PATENT ABSTRACTS OF JAPAN, vol. 3, nr. 30, March 13, 1979, page 157 E 97
FREQUENZ, vol. 33, no. 6, June 1979, Berlin, DE SCHWEIZER: "Principles of the use of digital attenuation in PCM networks", pages 178-181
INTERNATIONAL ZÜRICH SEMINAR ON DIGITAL COMMUNICATIONS, March 1978, Zürich, CH ALLES: "An intelligent network processor for a digital central office", pages A5.1-A5.6
IEEE NATIONAL TELECOMMUNICATIONS CONFERENCE, 1976, Dallas, US WEGNER: "The GTD-1000 digital PABX", pages 11.2-1 to 11.2-6

Signal control system for a time-division speech network

The present invention relates to a signal control system, and more particularly to a control system for a digital signal on a speech path in a time-division switching system.

In a space-division switching system handling analog signals, even if an originating terminal is connected via a digital transmission line with a terminating terminal, a loss is required for retaining moderate speech quality is imparted by terminal equipment to a repeater line. In a time-division switching system handling digital signals, when a digital transmission line is used, no terminal equipment is needed since the originating terminal can be interfaced directly with the digital transmission line. Accordingly, it is necessary to connect a loss pad switch with, and disconnect it from, the digital transmission line in the originating terminal. Further, since the loss required to be inserted differs in dependence upon the different kinds of connections and terminating terminals, various insertion losses (for example, 3 dB, 5 dB, 6 dB, etc) must be provided for, and for inserting these different losses, there has been proposed a digital pad adapted to be inserted into a highway.

In a time-division switching system, its switch components can be constituted by semiconductor parts thereby to permit more rapid switching operations; therefore, connection, disconnection, switching and like operations in respect of a speech path can be performed substantially instantaneously by direct control of a time-division speech network which is formed of electronic parts such as memories, gates and so forth.

In a case where a time switch of a random write-sequential read arrangement is provided on the backward side of a time-division speech network, setting and disconnection of a speech path take place in the manner described below.

With the abovesaid time switch, a speech path is set up by reading out data written in a time switch control memory from a common control unit, writing speech information into a speech memory using the read-out data as a write address, and reading out the written speech information onto a backward highway using the output from a channel counter as an address. Disconnection of the speech path is effected by erasing the address data written in the time switch control memory. When the address data is erased, speech information is no longer written in the speech memory and the transmission of speech information is stopped, thus cutting off the speech path. In this case, where the supply of read addresses from the channel counter is maintained, the read out of speech information from the speech memory to the forward highway continues.

In the above case, the cutting off of a speech path is accompanied by such problems as follows.

After cutting off of a speech path, new speech information is not written into the speech memory of the time switch at an address assigned to the speech path, so that speech information present before cutting off of the speech path remains in the speech memory. As a result of this, constant data (the residual data) is continuously sent out on a channel of the output side. When this data is decoded by a decoding circuit, a DC current of a level depending on the residual data is provided at the output of the decoding circuit.

Accordingly, when there is connected to the aforesaid speech network a signal processing unit, for example, a conference trunk, which is subject to interference by a DC signal in the output from a decoding circuit, there must be provided DC signal cutting off means for the following reasons. In a conference trunk in a time-division switching system, digital speech signals input from a plurality of input terminals are first decoded by a decoding circuit to form analog signals and then mixed together, thereafter being distributed to subscribers taking part in a conference; therefore, a DC signal of a high level may sometimes be applied to the conference trunk from a decoding circuit via an input terminal connected to a disconnected speech path, interfering with conference speech.

Further, in the case in which an originating terminal is connected with a digital repeater line, the residual data is continuously sent out to the terminating terminal without being decoded, so that according to the pattern of the residual data, for example, when the data are all "0", clock pulses cannot be reconstructed in the terminating terminal, making signal transmission impossible.

Moreover, when changing over the connection of a speech path of the speech network, a signal given by the residual data appears in a signal to be newly transmitted and according to the pattern of the residual data, a high degree of discontinuity may be introduced into the signal to produce a noise.

The above problems are posed when a time switch of a random write-sequential read construction is provided on the backward side of a time-division speech network.

In the prior art, a signal tone which is obtained by making a continuous signal tone intermittent, for example, a busy tone, is generated by ON-OFF control of a continuous signal source, but such ON-OFF control can be achieved in the time-division speech network. When interrupting the signal tone in the speech network however, there are presented exactly the same problems as described above.

In the transmission of a howler tone, it is general practice in the prior art to connect a howler trunk to a telephone set which appears to be making a permanent call and to gradually increase the sending level of the howler tone in the howler trunk. To effect this, each howler trunk must be equipped with means for gradually increasing the sending level, and it is impossible to simultaneously send out a howler tone from one howler trunk to a plurality of telephone sets, since the howler sending operation starts from a different moment for each telephone set.

Furthermore, a multi-frequency signal receiver is required to perform correct reception only when its signal receiving level lies within a certain range, and to fulfil this requirement, the receiver is tested by sending thereto signals of different receiving levels. In the case of a time-division switching system, in order to vary the receiving level of a multi-frequency signal, it is customary in the prior art to connect a multi-frequency signal transmitter via a time-division speech network to test equipment and to connect the test equipment via the time-division speech network to a multi-frequency signal receiver under test to form a test circuit from the multi-frequency transmitter to the multi-frequency receiver under test and to provide various losses from the test equipment. Accordingly, such a special test equipment as mentioned above is required in the prior art.

As described above, the prior art has a defect in that signal sending level changing means must be provided in a tone sending device (for example, a howler trunk) or in the abovesaid multi-frequency signal receiver test equipment so as to obtain a tone signal of varying sending level.

FR—A—2 226 797 discloses, in the context of two-stage space switching means for use in a telecommunications switching system of a time division multiplexing type, the achievement of attenuation of a pulse code modulation signal by using a pulse code word to address a memory location holding a code corresponding to an attenuation of ndB with respect to the address code used.

Patent Abstracts of Japan, vol. 3, No. 30, March 13, 1979, page 157 E97, relating to JP—A—54 9511, discloses a means for changing gain in a digital area of a telephone exchange in conversion of a linear PCM code to a companding PCM code. ROM's are used to effect code conversion and gain control, corresponding to a desired gain ratio 1, $\alpha$ or $\beta$, at the same time.

IEEE National Telecommunications Conference, 1976, Dallas, pages 11.2-1 to 11.2-6, in an article by R. C. Wegner, entitled "The GTD-1000 digital PABX", discloses, in the context of a digital PABX, the accomplishment of insertion loss padding by substituting an appropriately modified PCM sample for every voice sample leaving the switching network of the PABX. The modified samples are obtained from ROM chips which contain all possible PCM samples for several levels of insertion loss.

International Zurich Seminar on Digital Communications, March 1978, Zurich, pages A5.1 to A5.6, in an article by H. G. Alles entitled "An intelligent network processor for a digital central office", discloses that the best location for effecting programmable subscriber loop loss is the centre of the digital network.

Frequenz, Vol. 33, No. 6, June 1979, Berlin, pages 178—181, in an article by Schweitzer entitled "Principles of the use of digital attenuation in PCM networks", discloses the attenuation of a pulse code modulated signal in the digital domain. Every PCM word is replaced by another corresponding to the original word but with a smaller value in accordance with the attenuation or loss. A conversion table for such replacement can be established in ROM. Attenuation or loss factors of OdBr, −3dBr, −5dBr and −6dBr may thus be provided. The necessary hardware can be realised economically, it is disclosed, by using such digital loss implemented in the central part of a digital exchange, and the device used can work in time division multiplex fashion for many switch circuits. The hardware will be primarily designed, it is disclosed, for a OdBr attenuation factor with additional attenuation switched in for −3dBr, −5dBr and −6dBr.

According to the present invention there is provided a signal control system for a time-division speech network having signal attenuation means, provided centrally of the speech network, which are selectively operable in respect of an input signal received thereat to send out a signal corresponding to the input signal as received or a signal corresponding to the input signal as attenuated by a predetermined amount, characterised in that the signal attenuation means comprise a digital pad switch inserted in a highway of the time-division speech network in which there are disposed time switches on the backward side of the speech network, each time switch reading out speech information from a speech memory in the order of addresses assigned by the output from a channel counter; the digital pad switch being arranged and operable so as to send out on a speech path passing through the digital pad switch, under control of a common control unit, and in response to a selection signal supplied to the digital pad switch, a selected signal which is one of the following:— a signal the same as an input signal from the speech path to the digital pad switch, signals respectively corresponding to the input signal as attenuated by predetermined amounts and a zero level signal, unaffected by the magnitude of the input signal.

An embodiment of the present invention can offer a solution to the abovesaid problems involved in the cutting off of a speech path by the use of an improved digital pad switch which is provided in each highway to a time switch provided on the backward side of a time-division speech network in which the time switches each read out speech information from a speech memory in the order of addressing, and in which memory addresses are assigned by the output from a channel counter.

An embodiment of the present invention can solve, through utilization of the abovesaid digital pad switch, the abovesaid problems involved in the ON-OFF control of a tone signal in the abovesaid time-division speech network.

An embodiment of the present invention can permit the sending out of a howler tone from one signal tone source of a constant level to a plurality of telephone sets in the abovesaid time-division speech network.

An embodiment of the present invention can permit testing of a multi-frequency signal receiver by varying the receiving level thereof without using special test equipment which has a function of applying a variable attenuation to a multi-frequency signal.

The present invention permits efficient use of the abovesaid digital pad switch.

Reference is made, by way of example, to the accompanying drawings, in which:—

Figure 1 is a schematic connection diagram illustrating a preferred embodiment of the present invention;

Figure 2 is a schematic block diagram illustrating an example of a digital pad switch for use in the embodiment of Figure 1; and

Figure 3 is a schematic block diagram illustrating another example of a digital pad switch for use in the embodiment of Figure 1.

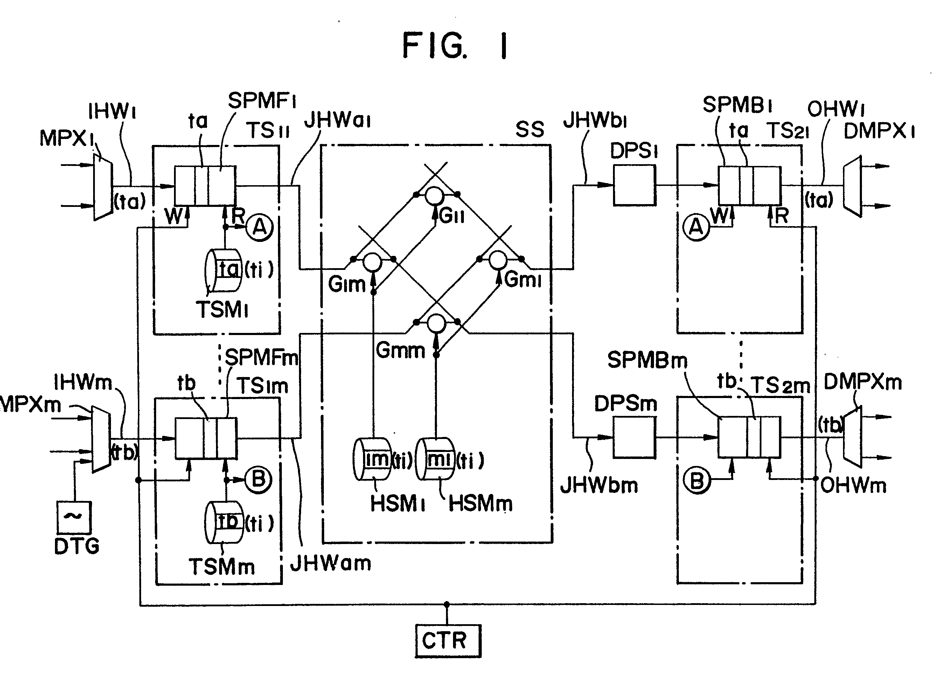

Figure 1 illustrates an example of a time-division speech network according to the present invention. in Figure 1, reference characters $IHW_1$ to $OHW_m$ indicate incoming highways; $TS_{11}$ to $TS_{1m}$ designate primary time switches; SS identifies a space switch; and $TS_{21}$ to $TS_{2m}$ denotes secondary time switches provided on the backward side of the speech network. The speech network shown in Figure 1 is a twin control type speech network generally referred to as the T-S-T type, but the present invention is not limited specifically to this system. Reference characters $SPMF_1$ to $SPMF_m$ represent speech memories of the primary time switches $TS_{11}$ to $TS_{1m}$; $TMSM_1$ to $TSM_m$ show time switch control memories; CTR refers to a channel counter; $HSM_1$ to $HSM_m$ indicate highway control memories; $SPMB_1$ to $SPMB_m$ designate speech memories of the secondary time switches $TS_{21}$ to $TS_{2m}$; $OHW_1$ to $OHW_m$ identify outgoing highways; $JHW_{a1}$ to $JHW_{am}$ and $JHW_{b1}$ to $JHW_{bm}$ denote junctor highways; and $DPS_1$ to $DPS_m$ represent digital pad switches.

The channel counter CTR is a circulating counter which resets its count output to "0" when it has counted synchronizing clock pulses sent thereto up to the number of time slots allotted to one frame of each of the highways $IHW_1$ to $IHW_m$ and $OHW_1$ to $OHW_m$. The count outputs from the channel counter CTR are used as write addresses for the speech memories $SPMF_1$ to $SPMF_m$ of the primary time switches $TS_{11}$ to $TS_{1m}$ and as read addresses for the speech memories $SPMB_1$ to $SPMB_m$ of the secondary time switches $TS_{21}$ to $TS_{2m}$.

A description will be given of the principles of the speech network of Figure 1, for example, in connection with the case where information on a time slot $t_a$ of the incoming highway $IHW_1$ is sent out to a time slot $t_b$ of the outgoing highway $OHW_m$ and information on a time slot $t_b$ of the incoming highway $IHW_m$ is set out to a time slot $t_a$ of the outgoing highway $OHW_1$.

The time switch control memory $TSM_1$ of the primary time switch $TS_{11}$ is a circulating memory which has addresses equal in a number to the number of time slots in one frame of the junctor highway $JHW_{a1}$ and is arranged so that it is accessed in the order of the addresses to read out its stored contents. In each address is written address information of the speech memory $SPMF_1$ by a common control unit (not shown) of the speech network.

The speech memory $SPMF_1$ is accessed for writing in the order of its addresses, using the outputs from the channel counter CTR as write addresses, whereby input information of the incoming highway $IHW_1$ is written in the memory $SPMF_1$ in the order of its addresses, that is sequentially. In this case, in the time slot $t_a$ of the incoming highway $IHW_1$, the number of the time slot $t_a$ is assigned as an address from the channel counter CTR, and the information on the time slot $t_a$ is written in the address $t_a$.

In this case, since $t_a$ is written as address information by the abovesaid common control unit (not shown) in the area to be addressed in a time slot $t_i$ ($a \neq i$) of the time switch control memory $TSM_1$, the address information $t_a$ is read out in the time slot $t_i$, by which the address $t_a$ of the speech memory $SPMF_1$ is accessed to read out therefrom information onto the junctor highway $JHW_{a1}$. That is, the information on the time slot $t_a$ of the incoming highway $IHW_1$ is provided on the time slot $t_i$ of the junctor highway $JHW_{a1}$.

In the space switch SS there are provided highway control memories $HSM_1$ to $HSM_m$ respectively corresponding to the incoming junctor highways $JHW_{a1}$ to $JHW_{am}$. The space memory is identical in construction with the time switch control memory $TSM_1$, but in the space memory the common control unit has written data for assigning a required one of gates $G_{11}$ to $G_{1m}$ and $G_{m1}$ to $G_{mn}$ which respectively connect the incoming junctor highways $JHW_{a1}$ to $JHW_{am}$ with the outgoing highways $JHW_{b1}$ to $JHW_{bm}$.

In this case, since information for assigning the gate $G_{1m}$ is written in the address of the highway control memory $HSM_1$ for the incoming junctor highway $JHW_{a1}$ which is to be read out in the time slot $t_i$, the gate $G_{1m}$ is

assigned to conduct in the time slot $t_i$, through which gate the information on the incoming junctor highway $JHW_{a1}$ in the time slot $t_i$ is passed on to the outgoing junctor highway $JHW_{bm}$ in the same time slot $t_i$. Also, the information on the incoming highway $IHW_m$ in the time slot $t_b$ is similarly provided on the outgoing junctor highway $JHW_{b1}$ in the time slot $t_i$.

To the junctor highways $JHW_{b1}$ to $JHW_{bm}$ are respectively connected the digital pad switches $DPS_1$ to $DPS_m$, which will be described later.

The outputs from the time switch control memories $TSM_1$ to $TSM_m$ of the primary time switches $TS_{11}$ to $TS_{1m}$ (address information) are respectively applied as write address information for the speech memories $SPMB_1$ to $SPMB_m$ of the secondary time switches $TS_{21}$ to $TS_{2m}$ to the speech memories $SPMB_1$ to $SPMB_m$. Accordingly, information on the time slot $t_b$ of the incoming highway $IHW_m$ is provided on the time slot $t_i$ of the junctor highway $JHW_{b1}$ and then to the speech memory $SPMB_1$ of the secondary time switch $TS_{21}$. The address information $(t_a)$ read out from the time switch control memory $TSM_1$ in the time slot $t_i$ is also applied as a write address to the speech memory $SPMB_1$ to write therein information on the time slot $t_i$ of the junctor highway $JHW_{b1}$ at the address $t_a$ which is read out in the time slot $t_a$ in the case of sequential read.

By the output information from the channel counter CTR in the time slot $t_a$, the abovesaid information written in the address $t_a$ of the speech memory $SPMB_1$ is read out and output on the time slot $t_a$ of the outgoing highway $OHW_1$.

In this way, the information in the time slot $t_b$ of the incoming highway $IHW_m$ is output on the time slot $t_a$ of the outgoing highway $OHW_1$. Likewise, the information on the time slot $t_a$ of the incoming highway $IHW_1$ is output on the time slot $t_b$ of the outgoing highway $OHW_m$. Thus, speech paths are set up as described above, performing desired switching connections.

In Figure 1, reference characters $MPX_1$ to $MPX_m$ indicate multiplexers for multiplexing information; and $DMPX_1$ to $DMPX_m$ designate demultiplexers for demultiplexing information. These multiplexers and demultiplexers are provided as required.

In the case of cutting off the speech paths set up as described above, the address information $t_a$ and $t_b$ written in the addresses of the time switch control memories $TSM_1$ and $TSM_m$ to be read out in the time slot $t_i$ are erased under the control of the aforementioned common control unit (not shown). As a result of this, in the time slot $t_i$ the write addresses $t_a$ and $t_b$ for the speech memories $SPMB_1$ and $SPMB_m$ of the secondary time switches $TS_{21}$ and $TS_{2m}$ are not assigned and consequently no new speech information is written in the speech memories. Accordingly, when the addresses $t_a$

and $t_b$ are assigned as read addresses by the output from the channel counter CTR, new speech information is not read out on the outgoing highways $OHW_1$ and $OHW_m$, thus cutting off the speech paths. Even after cutting off of the speech paths, however, the speech information remaining in the addresses $t_a$ and $t_b$ of the speech memories $SPMB_1$ and $SPMB_m$ is read out by the channel counter CTR onto the outgoing highways $OHW_1$ and $OHW_m$ in the time slots $t_a$ and $t_b$. This poses the problems described previously.

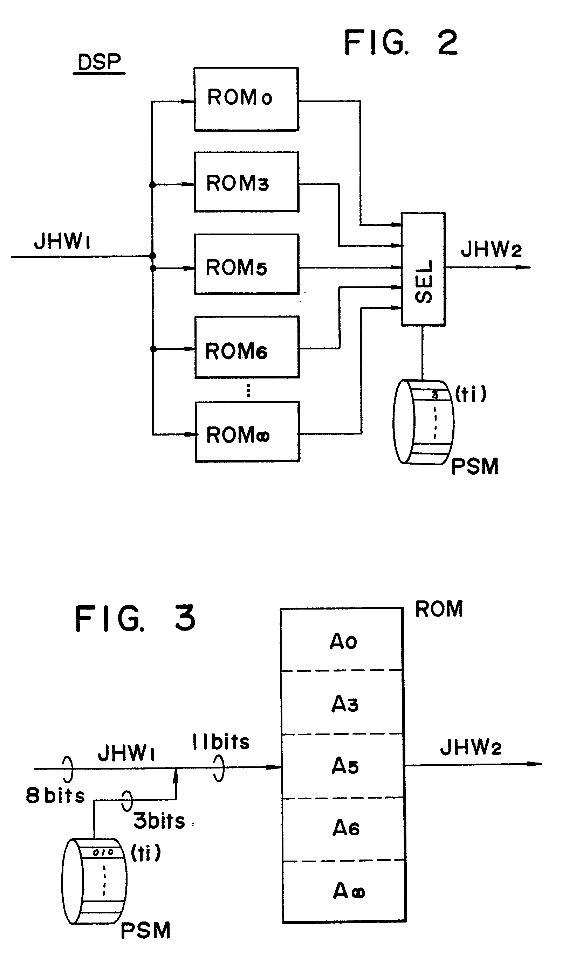

Next, a description will be given of the digital pad switches $DPS_1$ to $DPS_m$ employed in the embodiment of Figure 1. Figure 2 illustrates an example of the construction of the digital pad switch, which attenuates, by specified amounts, time-division multiplex information input from the junctor highway $JHW_1$ and provides attenuated information on the junctor highway $JHW_2$.

In Figure 2, reference characters $ROM_0$, $ROM_3$, $ROM_5$, $ROM_6 \ldots ROM\infty$ indicate read only memories; SEL designates a selector; and PSM identifies a pad switch control memory.

The input from the junctor highway $JHW_1$ is time-division multiplex information wherein, for example, an 8-bit PCM code is provided in each time slot. The read only memories $ROM_0$, $ROM_3$, $ROM_5$, $ROM_6 \ldots ROM\infty$ each have an address corresponding to the abovesaid PCM code. In the read only memory $ROM_0$ at the address corresponding to the input PCM code is prestored the same PCM code as the input PCM code. In the read only memories $ROM_3$, $ROM_5$ and $ROM_6$, at their respective addresses corresponding to the input PCM code, are respectively prestored converted PCM codes which are related to the input PCM code in that the prestored codes are attenuated by 3 dB, 5 dB and 6 dB, respectively as compared with the input code. In the read only memory $ROM\infty$ provided according to the present invention, a PCM code (for example, 01111111) corresponding to a zero level pattern is prestored in all addresses corresponding to input PCM codes.

For example, when the 8-bit PCM code is input from the junctor highway $JHW_1$ in the time slot $t_i$, the same PCM code as the input PCM code, and converted PCM codes in which the input PCM code has been attenuated 3 dB, 5 dB and 6 dB, respectively, and the converted PCM code corresponding to the zero level pattern, are read out from the addresses of the read only memories $ROM_0$, $ROM_3$, $ROM_5$, $ROM_6 \ldots ROM\infty$ designated by the input PCM code into the selector SEL.

The pad switch control memory PSM is identical in construction with the aforesaid time switch control memory $TSM_1$ and, in the address to be read out in each time slot, there is written by the common control unit (not shown) information concerning the attenuation required for information of each time slot. Assuming that information corresponding to 3 dB ($ROM_3$)

attenuation has been written in the address to be read out in the time slot $t_i$, this information is read out in the time slot $t_i$ and applied to the selector SEL, which selects and sends out the output from the read only memory $ROM_3$ corresponding to 3 dB attenuation of the original input PCM code to the junctor highway $JHW_2$. Accordingly, speech information which is input to the junctor highway $JHW_1$ in the time slot $t_i$ is attenuated 3 dB and provided on the junctor highway $JHW_2$. In a similar manner, information input to the junctor highway $JHW_1$ can be attenuated by 0 dB, 5 dB and 6 dB. Likewise, by writing information of an attenuation $\infty$ in the address of the pad switch control memory PSM which is read out in the time slot $t_i$ and selecting the output from the read only memory $ROM\infty$, the fixed PCM code of the aforesaid zero level can be provided on the junctor highway $JHW_2$ regardless of the speech information input to the junctor highway $JHW_1$.

Now, let it be assumed that speech paths are set up as described previously with regard to Figure 1. In the cutting off of the speech paths, according to the present invention, the information of attenuation $\infty$ is written in those addresses of the pad switch control memories of the digital pad switches $DPS_1$ and $DPS_m$ which are read out in the time slot $t_i$. As a result of this, for example, in a period of one frame, zero level PCM codes derived from the digital pad switches $DPS_1$ and $DPS_m$ are written as speech information in the addresses $t_a$ and $t_b$ of the speech memories $SPMB_1$ and $SPMB_m$ of the secondary time switches $TS_{21}$ and $TS_{2m}$. Then, the information $t_a$ and $t_b$ which has been written in the addresses of the time switch control memories $TSM_1$ and $TSM_m$ used for setting up the abovesaid speech paths is erased, that is, the addresses which are accessed in the time slot $t_i$ are erased. By this, the speech paths are cut off, but the zero level PCM codes written in the addresses $t_a$ and $t_b$ of the speech memories $SPMB_1$ and $SPMB_m$ are applied to the time slots $t_a$ and $t_b$ of the outgoing highways $OHW_1$ and $OHW_m$ without interruption, thus preventing the problems described previously.

Signal control, for example, ON-OFF control of a continuous tone signal can be achieved in the following manner. In Figure 1, a continuous digital tone generator DTG connected to the input end of the time-division speech network is provided via the multiplexer $MPX_m$ to a suitable time slot of the incoming highway $IHW_m$, for example, the aforesaid time slot $t_b$, by which such switching as described above is performed, and the output from the digital tone generator DTG can be provided on the time slot $t_a$ of the outgoing highway $OHW_1$. In this case, the continuous tone signal from the digital tone generator DTG is sent out via the junctor highway $JHW_{b1}$ and the digital pad switch $DPS_1$, of the construction shown in Figure 2. Accordingly, the ON-OFF control of the tone signal can be achieved by controlling the pad switch control memory PSM of the digital pad switch $DPS_1$. That is, by the common control unit (not shown), in a tone signal sending-out period select data corresponding to the read only memory $ROM_0$ with no attenuation is written in the address of the pad switch control memory PSM which is read out in the time slot, for example $t_i$, thereby passing the tone signal through the digital pad switch $DPS_1$ without attenuation. In a tone signal interruption period, select data corresponding to the read only memory $ROM\infty$ is written in the abovesaid address to send out the PCM code corresponding to the zero level, interrupting the tone signal. By repeating this processing, the ON-OFF control of the tone signal is performed. In this case, if it is necessary to attenuate the tone signal, then the tone signal is transmitted via a read only memory wherein it is attenuated as required.

Next, a description will be given of the sending out of a howler tone.

In this case, as the digital tone signal generator DTG in Figure 1, use is made of a howler tone generator which sends out a howler tone (a digital tone signal) of a constant level. Let it be assumed that the receiving side of a telephone set to which the howler tone is applied corresponds to the time slot $t_a$ of the outgoing highway $OHW_1$. By performing such switching connection as described previously, the howler tone generator DTG is connected via the digital pad switch $DPS_1$ to the abovesaid telephone set (the time slot $t_a$ of the outgoing highway $OHW_1$). When making the howler tone gradually louder, loss select information of the pad switch control memory (PSM) is sequentially changed under the control of software in accordance with a mode prepared in the common control unit (not shown) for decreasing the insertion loss in a stairstep manner (changing over losses inserted by the digital pad switch $DPS_1$ in a decreasing order), by which the level of signal received by the telephone set is gradually increased in a stairstep manner, achieving the abovesaid object.

In the case of sending out a howler tone, no sending level adjust means is required in the howler tone generator and it is possible to send from one howler tone generator of a constant level to a plurality of telephone sets howler tones which gradually increase their levels and start from different moments, this permits simplification of the howler tone sending means.

A multi-frequency signal receiver and a pushbutton signal receiver are required to correctly receive and analyse information from only an input multi-frequency signal of a level lying within a constant range. According to the present invention, a multi-frequency transmitter is connected to a forward side of the time-division speech network and is used as the digital tone signal generator DTG shown in Figure 1, and a multi-frequency receiver under test is connected to the backward side of the time-division speech network with the multi-frequency transmitter. The common control unit (not shown) performs control for varying the attenuation provided by the digital pad switch inserted in the speech path set up from the transmitter to the receiver by which the level of the input signal to the multi-frequency signal receiver under test can be varied, and accordingly a sensitivity test of the receiver can be carried out. In this case, there is no need to use special test equipment which has a function of applying a variable attenuation to the multi-frequency signal.

With the present invention, it is also possible to generate and send out a variety of signal tones by attenuating the tone signal from a continuous digital tone signal generator by certain amounts at a constant timing under the control of the common control unit.

The present invention is also applicable to the control of the DC output (decoder output) level of an idle signal.

Figure 3 illustrates another example of the digital pad switch. In Figure 3, reference character ROM indicates a read only memory, which has areas $A_0$, $A_3$, $A_5$, $A_6$ and $A\infty$. The other reference characters identify the same parts as those in Figure 2. In this case, the areas $A_0$, $A_3$, $A_5$, $A_6$ and $A\infty$ are assigned by 3-bit information and each have addresses corresponding to, for example, an 8-bit PCM code as is the case with the read only memory $ROM_0$ in Figure 2. In the area $A_0$ there is prestored in each address the same PCM code as the input PCM code corresponding to the address. In the areas $A_3$, $A_5$ and $A_6$ there are similarly prestored converted PCM codes which correspond to the input PCM code as attenuated by 3 dB, 5 dB, and 6 dB, respectively. In the area $A\infty$ a PCM code (for example, 01111111) corresponding to a zero level pattern is prestored in all addresses corresponding to the input PCM code.

In a case where information input from the junctor highway $JHW_1$ in the time slot $t_i$ is attenuated by 3 dB, three bits, for example, 010, for assigning the area $A_3$ is written by the common control unit (not shown) into the address of the pad switch control memory PSM which is read out in the time slot $t_i$. In the time slot $t_i$, the 3-bit information read out from the pad switch control memory PSM for assigning the area $A_3$ and the 8-bit PCM code from the incoming junctor highway $JHW_1$ are applied as address information for reading out the read only memory ROM. That is, a total of 11 bits are transferred to the digital pad switch, from which is read out on the junctor highway $JHW_2$ information in which the address assigned by the 8-bit PCM code in the area assigned by the abovesaid three bits, that is, an 8-bit converted PCM code corresponding to the input 8-bit PCM code as attenuated by 3 dB. In this way, by writing three bits corresponding to each of the areas $A_0$, $A_3$, $A_5$, $A_6$ and $A\infty$ of the read only memory ROM in the address corresponding to each time slot of the pad switch control memory PSM, information on each time slot of the junctor highway $JHW_1$ can be attenuated by a predetermined amount (including zero attenuation and cutting off of a speech path by sending out of the zero level pattern information). As will be appreciated from the above the digital pad switch of Figure 3 has the same functions as the digital pad switch of Figure 2.

The digital pad switch can be formed by read only memories, as shown in Figures 2 and 3, but is not limited specifically thereto and may also be any other means which imparts a loss to a speech by digital processing; namely, it is also possible to employ, for example, a variable digital pad switch of a digital multiplying system in which the input code is multiplied by a digital multiplier by a coefficient for attenuating the input PCM code by a predetermined amount.

Thus, in an embodiment of this invention, a digital pad switch is inserted in each highway of a time-division speech network in which time switches are disposed on the backward side of the speech network. Each time switch reads out speech information from a speech memory in the order of addresses, assigning memory addresses on the basis of the output from a channel counter. The digital pad switch is arranged so that it may send out, under the control of a common control unit, a selected signal which is either the same as an input signal from each path to the digital pad switch, or is a signal attenuated by a predetermined amount as compared with the input signal, or is a zero level signal regardless of the magnitude of the input signal.

In the case of cutting off a speech path set up in the time-division speech network, the digital pad switch is controlled by the common control unit to send out the zero level signal as a signal of the speech path passing through the digital pad switch, and after writing the zero level signal in the speech memory of the time switch on the backward side, the speech path is cut off.

A continuous tone signal passing through the time-division speech network is input to the digital time pad switch, which is controlled by the common control unit to selectively send out a zero level signal for desired periods of time, thereby turning ON and OFF the tone signal. In the case of sending out a howler tone, the amount of attenuation of the tone signal is decreased by the control of the common control unit in a stairstep manner. In the case of testing a multi-frequency signal receiver, a multi-frequency signal transmitter and the multi-frequency signal receiver under test are connected to the backward and the forward side of the time-division speech network, respectively, and a path is set up between them and then a signal on the path is attenuated variously by the digital pad switch to vary the level of the input signal to the multi-frequency signal receiver.

Thus, the present invention permits efficient use of the digital pad switch.

## Claims

1. A signal control system for a time-division speech network having signal attenuation means ($DPS_1$, $DPS_m$), provided centrally of the speech network, which are selectively operable in respect of an input signal received thereat to send out a signal corresponding to the input signal as received or a signal corresponding to the input signal as attenuated by a predetermined amount, characterised in that the signal attenuation means comprise a digital pad switch ($DPS_1$, $DPS_m$) inserted in a highway ($JHW_{b1}$, $JHW_{bm}$) of the time-division speech network in which there are disposed time switches ($TS_{21}$, $TS_{2m}$) on the backward side of the speech network, each time switch ($TS_{21}$, $TS_{2m}$) reading out speech information from a speech memory ($SPMB_1$, $SPMB_m$) in the order of addresses assigned by the output from a channel counter (CTR); the digital pad switch ($DPS_1$, $DPS_m$) being arranged and operable so as to send out on a speech path passing through the digital pad switch ($DPS_1$, $DPS_m$), under control of a common control unit, and in response to a selection signal supplied to the digital pad switch ($DPS_1$, $DPS_m$), a selected signal which is one of the following:— a signal the same as an input signal from the speech path to the digital pad switch ($DPS_1$, $DPS_m$), signals respectively corresponding to the input signal as attenuated by predetermined amounts and a zero level signal, unaffected by the magnitude of the input signal.

2. A signal control system as claimed in claim 1, wherein such a digital pad switch ($DPS_1$, $DPS_m$) is inserted in each highway ($JHW_{b1}$, $JHW_{bm}$) of the time-division speech network, and wherein, in a case in which a speech path set up in the time-division speech network is to be cut-off, a relevant digital pad switch ($DPS_1$, $DPS_m$) is controlled so as to send out the zero level signal as a signal on the speech path passing through the digital pad switch, and the zero level signal is written in a speech memory ($SPMB_1$, $SPMB_m$) of a time switch ($TS_{21}$, $TS_{2m}$) on the backward side, thereafter cutting off the speech path.

3. A signal control system as claimed in claim 1 or 2, wherein such a digital pad switch ($DPS_1$, $DPS_m$) is inserted in each highway ($JHW_{b1}$, $JHW_{bm}$) of the time-division speech network, and wherein the system is operable so that, in response to a signal sent out from a continuous tone signal generator (DTG) connected to the input end of the time-division speech network and reaching the output end thereof via a speech path thereof, a relevant digital pad switch ($DPS_1$, $DPS_m$) is so controlled by the common control unit as to repeatedly send out the zero level signal for a desired period of time thereby turning ON and OFF the tone signal.

4. A signal control system as claimed in claim 1 or 2, wherein such a digital pad switch ($DPS_1$, $DPS_m$) is inserted in each highway of the time-division speech network, and wherein the system is operable so that a signal sent out from a tone signal generator (DTG) connected to the input end of the time-division speech network and reaching the output end thereof via a speech path thereof is attenuated by a relevant digital pad switch in a stairstep manner.

5. A signal control system as claimed in claim 4, wherein a howler tone generator (DTG) of a constant level is connected as the tone signal generator to the input end of the time-division speech network; and insertion loss of a signal sent out from the howler tone generator via a speech channel of the time-division speech network to the output end thereof is decreased in a stairstep manner in accordance with preset timings.

6. A signal control system as claimed in claim 5, wherein a multi-frequency signal transmitter for sending out a multi-frequency signal of a constant level is connected to the input end of the time-division speech network; a multi-frequency signal receiver is connected to the output end of the time-division speech network; the multi-frequency signal transmitter is connected to the multi-frequency receiver via a speech channel of the time-division speech network; and the multi-frequency signal passing through the speech channel is attenuated in a stairstep manner by controlling a relevant digital pad switch ($DPS_1$, $DPS_m$), thereby to control a signal for testing the receiving sensitivity of the multi-frequency signal receiver.

## Revendications

1. Un système de commande pour un réseau de connexion temporel pour signaux de parole ayant des moyens d'atténuation ($DPS_1$, $DPS_m$), placés en position centrale dans le réseau de connexion pour signaux de parole, qui peuvent être actionnés sélectivement en relation avec un signal d'entrée reçu, pour émettre un signal correspondant au signal d'entrée tel qu'il est reçu ou un signal correspondant au signal d'entrée atténué d'une quantité prédéterminée, caractérisé en ce que les moyens d'atténuation de signal consistent en un commutateur d'atténuation numérique ($DPS_1$, $DPS_m$) inséré dans un canal ($JHW_{b1}$, $JHW_{bm}$) de réseau de connexion temporel pour signaux de parole, dans lequel se trouvent des commutateurs temporels ($TS_{21}$, $TS_{2m}$) du côté arrière du réseau de parole, chaque commutateur temporel ($TS_{21}$, $TS_{2m}$) lisant une information de parole dans une mémoire de parole ($SPMB_1$, $SPMB_m$) dans l'ordre d'adresses désignées par le signal de sortie d'un compteur de voies (CTR); et le commutateur d'atténuation numérique ($DPS_1$,

DPS$_m$) est conçu et pour fonctionner de façon à émettre sur un chemin de transmission de parole traversant le commutateur d'atténuation numérique (DPS$_1$, DPS$_m$), sous la commande d'une unité de commande commune et sous la dépendance d'un signal de sélection qui est appliqué au commutateur d'atténuation numérique (DPS$_1$, DPS$_m$), un signal sélectionné qui est l'un des suivants: un signal identique à un signral d'entrée provenant du chemin de transmission de parole et dirigé vers le commutateur d'atténuation numérique (DPS$_1$, DPS$_m$), des signaux correspondant respectivement au signal d'entrée atténué de quantités prédéterminées et un signal de niveau zéro, qui n'est pas affecté par la valeur du signal d'entrée.

2. Un système de commande signal selon la revendication 1, dans lequel un tel commutateur d'atténuation numérique (DPS$_1$, DPS$_m$) est inséré dans chaque canal (JHW$_{b1}$, JHW$_{bm}$) du réseau de connexion temporel pour signaux de parole et dans lequel, dans un cas dans lequel un chemin de transmission de parole établi dans le réseau de connexion temporel pour signaux de parole doit être coupé, en commutateur d'atténuation numérique concerné (DPS$_1$, DPS$_m$) est commandé de façon à émettre le signal de niveau zéro en tant que signal appliqué au chemin de transmission de parole traversant le commutateur d'atténuation numérique, et le signal de niveau zéro est écrit dans une mémoire de parole (SPMB$_1$, SPMB$_m$) d'un commutateur temporel (TS$_{21}$, TS$_{2m}$) du côté arrière, après quoi le chemin de transmission de parole est coupé.

3. Un système de commande de signal selon la revendication 1 ou 2, dans lequel un tel commutateur d'atténuation numérique (DPS$_1$, DPS$_m$) est inséré dans chaque canal (JHW$_{b1}$, JHW$_{bm}$) du réseau temporel de connexion pour signaux de parole, et dans lequel le système peut fonctionner de façon que sous l'effet d'un signal émis par un générateur de signal de tonalité continue (DTG) connecté à l'extrémité d'entrée du réseau de connexion temporel pour signaux de parole, et atteignant son extrémité de sortie par l'intermédiaire d'un chemin de transmission de parole de ce réseau, un commutateur d'atténuation numérique concerné (DPS$_1$, DPS$_m$) soit commandé par l'unité de commande commune de manière à émettre de façon répétée le signal de niveau zéro pendant une durée désirée, ce qui a pour effet de mettre le signal de tonalité en fonction et hors fonction.

4. Un système de commande de signal selon la revendication 1 ou 2, dans lequel un tel commutateur d'atténuation numérique (DPS$_1$, DPS$_m$) est inséré dans chaque canal du réseau de connexion temporel pour signaux de parole, et en ce que le système peut fonctionner de façon qu'un signal émis par un générateur de signal de tonalité (DTG) connecté à l'extrémité d'entrée du réseau de connexion temporel pour signaux de parole et atteignant l'extrémité de sortie de ce réseau, par l'intermédiaire d'un chemin de transmission de parole de celui-ci, soit atténué avec une configuration en escalier par un commutateur d'atténuation numérique concerné.

5. Un système de commande de signal selon la revendication 4, dans lequel un générateur de tonalité de hurleur (DTG) produisant un niveau constant est connecté en tant que générateur de signal de tonalité à l'extrémité d'entrée du réseau de connexion temporel pour signaux de parole, et l'atténuation d'insertion d'un signal émis par le générateur de signal de hurleur par l'intermédiaire d'une voie de parole du réseau de connexion temporel pour signaux de parole, vers l'extrémité de sortie de celui-ci, est diminuée avec une configuration en escalier, conformément à des caractéristiques temporelles fixées à l'avance.

6. Un système de commande de signal selon la revendication 5, dans lequel un émetteur de signal multifréquence destiné à émettre un signal multifréquence d'un niveau constant est connecté à l'extrémité d'entrée du réseau de connexion temporel pour signaux de parole; un récepteur de signal multifréquence est connecté à l'extrémité de sortie du réseau de connexion temporel pour signaux de parole; l'émetteur de signal multifréquence est connecté au récepteur de signal multifréquence par l'intermédiaire d'une voie de parole du réseau de connexion temporel pour signaux de parole; et le signal multifréquence qui transite par la voie de parole est atténué avec une configuration en escalier par la commande d'un commutateur d'atténuation numérique concerné (DPS$_1$, DPS$_m$), ce qui a pour effet de commander un signal pour tester la sensibilité de réception du récepteur de signal multifréquence.

**Patentansprüche**

1. Signalsteuersystem für ein Sprachsignal-Zeitmultiplex-Koppelfeld mit Signaldämpfungseinrichtungen (DPS$_1$, DPS$_m$), die zentral in dem Sprachsignal-Koppelfeld vorgesehen sind und die wahlweise in Beziehung zu einem dort empfangenen Signal betätigbar sind, um ein Signal entsprechend dem Eingangssignal, wie empfangen, oder ein Signal entsprechend dem Eingangssignal, wie um einen vorbestimmten Betrag gedämpft, auszusenden, dadurch gekennzeichnet, daß die Signaldämpfungseinrichtungen einen digitalen Dämpfungsgliedschalter (DPS$_1$, DPS$_m$) enthalten, der in eine Vielfachleitung (JHW$_{b1}$, JHW$_{bm}$) des Sprachsignal-Zeitmultiplex-Koppelfelds eingesetzt ist, wobei Zeitschalter (TS$_{21}$, TS$_{2m}$) an der Rückseite des Sprachsignal-Koppelfelds vorgesehen sind, wobei jeder Zeitschalter (TS$_{21}$, TS$_{2m}$) Sprachsignalinformationen von einem Sprachsignalspeicher (SPMB$_1$, SPMB$_m$) in der Folge von Adressen ausliest, die durch den Ausgang von einem Kanalzähler (CTR) zugeteilt sind, wobei der digitale Dämpfungsgliedschalter ($DPS_1$, $DPS_m$) so angeordnet und betätigbar ist, daß auf einem Sprachsignalweg, der durch den digitalen Dämpfungsgliedschalter ($DPS_1$, $DPS_m$) läuft, unter Steuerung einer gemeinsamen Steuereinheit und ansprechend auf ein Auswahlsignal, das dem digitalen Dämpfungsgliedschalter ($DPS_1$, $DPS_m$) zugeführt wird, ein ausgewähltes Signal ausgesandt wird, das eines der folgenden Signale ist:— ein Signal gleich wie ein Eingangssignal von dem Sprachsignalweg zu dem digitalen Dämpfungsgliedschalter ($DPS_1$, $DPS_m$), Signale, jeweils entsprechend dem Eingangssignal, wie um einen vorbestimmten Betrag gedämpft, und ein Nullpegelsignal, das durch die Größe des Eingangssignals unbeeinflußt ist.

2. Signalsteuersystem nach Anspruch 1, bei dem ein solcher digitaler Dämpfungsgliedschalter ($DPS_1$, $DPS_m$) in jeder Vielfachleitung ($JHW_{b1}$, $JHW_{bm}$) des Sprachsignal-Zeitmultiplex-Koppelfelds eingesetzt ist, und bei dem in dem Fall, in dem ein in dem Sprachsignal-Zeitmultiplex-Koppelfeld aufgebauter Sprachsignalweg abgeschaltet werden soll, ein einschlägiger digitaler Dämpfungsgliedschalter ($DPS_1$, $DPS_m$) so gesteuert wird, daß das Nullpegelsignal als ein Signal auf dem Sprachsignalweg, der durch den digitalen Dämpfungsgliedschalter läuft, ausgesandt wird und das Nullpegelsignal in einen Sprachsignalspeicher ($SPMB_1$, $SPMB_m$) eines Zeitschalters ($TS_{21}$, $TS_{2m}$) an der Rückseite geschrieben wird, woraufhin der Sprachsignalweg abgeschaltet wird.

3. Signalsteuersystem nach Anspruch 1 oder 2, bei dem ein solcher digitaler Dämpfungsgliedschalter ($DPS_1$, $DPS_m$) in jeder Vielfachleitung ($JHW_{b1}$, $JHW_{bm}$) des Sprachsignal-Zeitmultiplex-Koppelfelds eingesetzt ist und bei dem das System so betätigbar ist, daß ansprechend auf ein Signal, das von einem Signalgenerator (DTG) für eine kontinuierlichen Ton ausgesandt wird, der mit der Eingangsseite des Sprachsignal-Zeitmultiplex-Koppelfelds verbunden ist, und das dessen Ausgangsseite über einen Sprachsignalweg erreicht, ein einschlägiger digitaler Dämpfungsgliedschalter ($DPS_1$, $DPS_m$) so durch die gemeinsame Steuereinheit gesteuert wird, daß wiederholt das Nullpegelsignal für eine gewünschte Zeitperiode ausgesandt wird, um dadurch das Tonsignal ein- und auszuschalten.

4. Signalsteuersystem nach Anspruch 1 oder 2, bei dem ein solcher digitaler Dämpfungsgliedschalter ($DPS_1$, $DPS_m$) in jeder Vielfachleitung des Sprachsignal-Zeitmultiplex-Koppelfelds eingesetzt ist und bei dem das System so betätigbar ist, daß ein Signal, das von einem Tonsignalgenerator (DTG) ausgesandt wird, der mit der Eingangsseite des Sprachsignal-Zeitmultiplex-Koppelfelds verbunden ist, und das dessen Ausgangsseite über einen Sprachsignalweg erreicht, durch einen einschlägigen digitalen Dämpfungsgliedschalter treppenstufenartig gedämpft wird.

5. Signalsteuersystem nach Anspruch 4, bei dem ein Heultongenerator (DTG) mit konstantem Pegel als Tonsignalgenerator mit der Eingangsseite des Sprachsignal-Zeitmultiplex-Koppelfelds verbunden ist und bei dem eine Einfügungsdämpfung eines Signals, das von dem Heultongenerator über einen Sprachsignalkanal des Sprachsignal-Zeitmultiplex-Koppelfelds zu dessen Ausgangsseite ausgesandt wird, treppenstufenartig in Übereinstimmung mit einer voreingestellten Zeiteinstellung verringert wird.

6. Signalsteuersystem nach Anspruch 5, bei dem ein Mehrfrequenzsignalsender zum Aussenden eines Mehrfrequenzsignals mit konstantem Pegel mit der Eingangsseite des Sprachsignal-Zeitmultiplex-Koppelfelds verbunden ist, bei dem ein Mehrfrequenzempfänger mit der Ausgangsseite des Sprachsignal-Zeitmultiplex-Koppelfelds verbunden ist, bei dem der Mehrfrequenzsignalsender mit dem Mehrfrequenzsignalempfänger über eine Sprachsignalkanal des Sprachsignal-Zeitmultiplex-Koppelfelds verbunden ist und bei dem das durch den Sprachsignalkanal laufende Mehrfrequenzsignal treppenstufenartig gedämpft wird, indem ein einschlägiger digitaler Dämpfungsgliedschalter ($DPS_1$, $DPS_m$) gesteuert wird, wodurch ein Signal zum Prüfen der Empfangsempfindlichkeit des Mehrfrequenzsignalempfängers gesteuert wird.

# FIG. 1

# FIG. 2

DSP

# FIG. 3

2